# EUROPEAN PATENT APPLICATION

(11) **EP 3 562 002 A1**
(43) Date of publication of application: **30.10.2019**
(21) Application number: 18168903.5
(22) Date of filing: 24.04.2018
(51) Int. Cl.: H02K 7/18, F04D 29/66, F03D 80/60, F04D 19/00, H02K 9/14, H02K 5/20

(54) **COOLING FAN FOR A WIND TURBINE**

(71) Applicant: Siemens Gamesa Renewable Energy A/S, 7330 Brande (DK)
(72) Inventor: Soerensen, Peter Hessellund, 8740 Brædstrup (DK)
(74) Representative: Aspacher, Karl-Georg

(57) **Abstract**

A cooling fan (100) for a wind turbine (1) comprises:
- a cooling fan motor (110) extending along a longitudinal axis (X) between a drive end (111) and a non-drive end (112),
- a motor shroud (120) having a shroud base (121) transversal to the longitudinal axis (X) at the drive end (111) or at the non-drive end (112), and a lateral wall (122) extending from the shroud base (121) towards the non-drive end (112) or the drive end (111), respectively, up to an opening (123) of the motor shroud (120),
- a shroud cooling channel (130) comprised between the motor (110) and the motor shroud (120). The shroud cooling channel (130) comprises at least a first portion (131) longitudinally extending from the opening (123) to the shroud base (121) and at least a second return portion (132) extending from the shroud base (121) to the opening (123) .

## Description

### Field of invention

The present invention relates to a cooling fan for a wind turbine. Particularly, but not exclusively, the cooling fan of the present invention can be used for cooling the stator of an electric generator of a wind turbines.

### Art Background

An electric generator of the above mentioned type normally comprises a stator, a rotor and one or more cooling fans. Each cooling fan is powered by a cooling fan motor. By means of the fans, air is blown through the rotor stator gap and the stator air ducts to cool the generator, particularly but not exclusively the end-windings of the stator and the permanent magnets of the rotor.

When an increase of cooling power of the cooling fans is required, this cannot always be made through an increase the size of the motors, because of the limited available space.

One way of improving the performances of a cooling fan is that of increasing the cooling of the respective motor.

Reducing the cooling fan motors temperature of 10 °C is likely to increase significantly the AEP (Annual Energy Production) of the electric generator.

A first scope of the present invention is therefore that of providing a cooling fan for a an electric generator, in particular for a wind turbine, comprising a cooling fan motor, whose temperature is efficiently reduces in order to maximize the AEP of the electric generator.

A further scope is that of providing an improved noise reduction for the above described cooling fan.

### Summary of the Invention

These scopes may be met by the subject matter according to the independent claims. Advantageous embodiments of the present invention are described by the dependent claims.

According to the invention, a cooling fan for a wind turbine is provided. The cooling fan comprises:
- a cooling fan motor extending along a longitudinal axis between a drive end and a non-drive end,
- a motor shroud having a shroud base transversal to the longitudinal axis at the drive end or at the non-drive end, and a lateral wall extending from the shroud base towards the non-drive end or the drive end, respectively, up to an opening of the motor shroud,
- a shroud cooling channel comprised between the cooling fan motor and the motor shroud.

The shroud cooling channel comprises at least a first portion longitudinally extending from the opening to the shroud base and at least a second return portion extending from the shroud base to the opening.

Advantageously, according to the present invention, the cooling air between the motor and shroud flows along a first path from the shroud opening to the shroud base and subsequently along an opposite return path improves the cooling of the motor by increasing the amount of heat which is removed from the inside of the fan shroud.

According to an embodiment of the invention, the first portion and the second return portion of the shroud cooling channel are separated from each by a flow guide.

According to an embodiment of the invention, the flow guide is longitudinally extended from the opening of the motor shroud towards the shroud base. In particular, the flow guide may be parallel to the lateral wall of the motor shroud.

Advantageously, this creates, between the motor and the shroud, two cylindrical passages, one corresponding to the first portion of the shroud cooling channel and the second return portion. The first cylindrical portion of the shroud cooling channel may be provided between the motor and the flow guide. The second cylindrical return portion of the shroud cooling channel may be provided between the flow guide and the shroud.

According to an embodiment of the invention, the cooling is designed in such a way that the shroud base is provided at the drive end and the opening of the motor shroud at the non-drive end, the cooling fan comprising a principal rotor attached to the drive end of the motor for channeling a cooling medium from the drive end towards the non-drive end.

A secondary rotor may be attached to the non-drive end of the motor for channeling the cooling medium in the shroud cooling channel.

Advantageously, a portion of the main air flow, which is generated from the principal rotor, is deviated by the secondary rotor towards the shroud cooling channel, for cooling the motor of the cooling fan.

According to an embodiment of the invention, the cooling fan comprises a silencer adjacent to the opening of the motor shroud.

In particular, the silencer may be attached to the lateral wall of the motor shroud or to the flow guide.

Advantageously, the silencer is positioned such that it trails the fan motor. This reduces the pressure loss and enhances the noise reduction. In particular, the pressure loss at the non-drive end of the motor and at the front of the silencer is eliminated. In addition, the noise generating turbulence at the non-drive end of the motor and the front of the silencer is also reduced.

According to an embodiment of the invention, the silencer comprises a through hole connected to the shroud cooling channel.

Particularly, the silencer may longitudinally extend between a first longitudinal end adjacent to the opening of the motor shroud and a second longitudinal end, the first longitudinal end and the second longitudinal end being connected by the through hole.

The through hole permits to supply air to the motor air through the silencer from the second longitudinal to the first longitudinal end, thus permitting the silencers to be attached to the lateral wall of the motor shroud or to the flow guide.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematic cross section of an exemplary electric generator included in a wind turbine, which includes a cooling of according to the present invention,
Figure 2 shows a schematic longitudinal section of a first embodiment of a cooling of according to the present invention,
Figure 3 shows a schematic longitudinal section of a second embodiment of a cooling of according to the present invention.

### Detailed Description

The illustrations in the drawings are schematic. It is noted that in different figures, similar or identical elements are provided with the same reference signs.

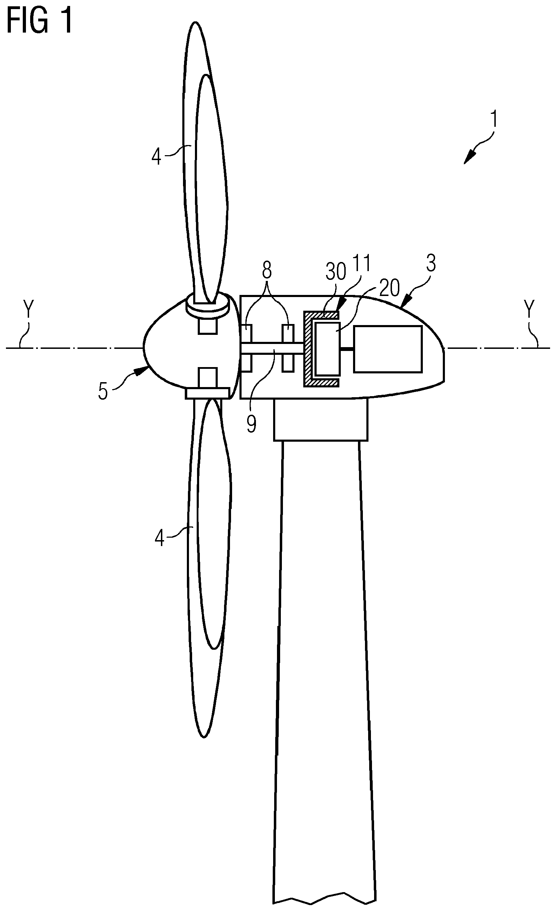

**Figure 1** shows a wind turbine 1 according to the invention. The wind turbine 1 comprises a tower 2, which is mounted on a non-depicted fundament. A nacelle 3 is arranged on top of the tower 2.

The wind turbine 1 further comprises a wind rotor 5 having two, three or more blades 4 (in the perspective of Figure 1 only two blades 4 are visible). The wind rotor 5 is rotatable around a rotational axis Y.

The blades 4 extend radially with respect to the rotational axis Y.

The wind turbine 1 comprises an electric generator 11.

The wind rotor 5 is rotationally coupled with the electric generator 11 by means of a rotatable main shaft 9.

According to other possible embodiments of the present invention (not represented in the attached figures), the wind rotor 5 is rotationally coupled directly with the electric generator 10 (direct-drive generator configuration).

A schematically depicted bearing assembly 8 is provided in order to hold in place the rotor 5. The rotatable main shaft 9 extends along the rotational axis Y. The electric generator 11 includes a stator 20 and a rotor 30. The rotor 30 is radially external to the stator 20 and is rotatable with respect to the stator 20 about the rotational axis Y.

According to another embodiment of the present invention (not shown), the rotor is radially internal to the stator and is rotatable with respect to the stator about the rotational axis Y.

One or more axial cooling fans 100 are provided inside the nacelle 3, in particular for cooling the stator 20.

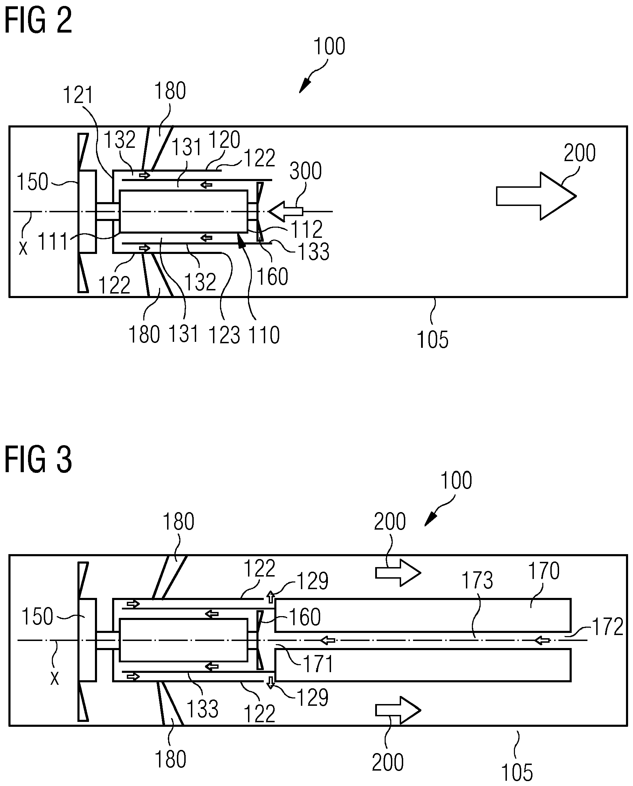

With reference to **Figure 2** the cooling fan 100 is shown inserted in a cylindrical duct 105. The cooling fan 100 generates a cooling medium (air) flow (schematically represented by the harrow 200) along the duct 105. The duct 105 and the cooling fan 100 have a common longitudinal axis X.

If not differently specified, in the following, the terms "longitudinal" and "longitudinally" have to be intended with reference to the axis X or to a direction parallel to the axis X.

The cooling fan 100 comprises a cooling fan motor 110 extending along the longitudinal axis X between a drive end 111 and a non-drive end 112. The cooling fan 100 is oriented in such a way that the drive end 111 is positioned upstream and the non-drive end 112 is positioned downstream with respect to the air flow 200.

If not differently specified, in the following, the terms "upstream" and "downstream" have to be intended with reference to the direction of the air flow 200 generated by the cooling fan 100 and therefore longitudinally oriented from the drive end 111 to the non-drive end 112.

The cooling fan 100 comprises further comprises a cylindrical motor shroud 120 also extending along the longitudinal axis X and surrounding the motor 110.

The motor shroud 120 comprises a shroud base 121 at the drive end 111, the shroud base 121 being transversal to the longitudinal axis X. In particular, the shroud base 121 may be orthogonal to the longitudinal axis X.

The motor shroud 120 further comprises a lateral wall 122 extending from the shroud base 121 towards the non-drive end 112 up to an opening 123 of the motor shroud 120.

According to alternative embodiments of the present inventions (not shown) the shroud base is provided at the non-drive end 112 of the motor 110 and the lateral wall 122 extends from the shroud base 121 towards the drive end 111. According to the shown embodiments of the attached **Figures 2** and **3****,** the lateral wall 122 is cylindrical.

The cooling fan 100 comprises a principal rotor 150 attached to the drive end 111 of the cooling fan motor 110 for channeling a cooling medium from the drive end 111 towards the non-drive end 112. A plurality of guide vanes 180 are provided around the longitudinal axis X and extends orthogonally to the longitudinal axis X between the lateral wall 122 of the motor shroud 120 and the duct 105.

The rotation of the principal rotor 150 move the cooling medium (air) through the guide vanes 180, thus generating the air flow 200, which is mainly parallel to the longitudinal axis X.

The cooling fan 100 further comprises a shroud cooling channel 130 comprised between the motor 110 and the motor shroud 120.

The shroud cooling channel 130 comprises a first portion 131 longitudinally extending from the opening 123 to the shroud base 121 and at least a second return portion 132 extending from the shroud base 121 to the opening 123.

The first portion 131 and the second return portion 132 of the shroud cooling channel 130 are separated from each by a flow guide 133. The flow guide 133 longitudinally extends from the opening 123 of the motor shroud 120 towards the shroud base 121. The flow guide 133 is longitudinally distanced from the shroud base 121, a space being provided in the motor shroud 120 between flow guide 133 and the shroud base 121 for connecting the first portion 131 and the second return portion 132 of the shroud cooling channel 130. According to the shown embodiments of the attached **Figures 2** and **3****,** the flow guide 133 is cylindrical and intermediate between the motor 110 and the lateral wall 122 of the motor shroud 120. Therefore the flow guide 133 is parallel to the lateral wall 122 of the motor shroud 120.

The flow guide 133 inside the motor shroud 120 divides the space between the motor 110 and the lateral wall 122 in the first cylindrical portion 131 of the shroud cooling channel 130, provided between the motor 110 and the flow guide 133, and the second cylindrical return portion 132 of the shroud cooling channel 130, provided between the flow guide 133 and the lateral wall 122 of the motor shroud 120.

The cooling fan 100 comprises a secondary rotor 160 attached to the non-drive end 112 of the cooling fan motor 110 for channeling the cooling medium in the shroud cooling channel 130. At the longitudinal side of the opening 123 and of the non-drive end 112, the flow guide 133 longitudinally extends beyond the opening 123 and the motor 110, so to create a cylindrical housing for the secondary rotor 160.

The secondary rotor 160 deviates a secondary portion 300 of the main air flow 200 towards the shroud cooling channel 130, first through the first portion 131 and then through the second return portion 132. At the longitudinal side of the non-drive end 112, the flow guide 133 longitudinally extends also beyond the secondary rotor 160, in such a way that the secondary portion 300 of the main air flow 200 is forced to enter the first portion 131, in flow contact with the motor 110, of the shroud cooling channel 130, in order to maximize the cooling of the motor 110.

With reference to **Figure 3** the cooling fan 100 further comprises a cylindrical silencer 170 inside the duct 105 and longitudinally adjacent to the opening 123 of the motor shroud 120. The silencer 170 is attached to the downstream longitudinal end of the flow guide 133.

Alternatively and according to an alternative embodiment of the present inventions (not shown), the silencer 170 is attached to the lateral wall 122 of the motor shroud 120.

The silencer 170 is cylindrical in shape and co-axial with respect to the longitudinal axis X. The silencer 170 longitudinally extends between a first longitudinal end 171 adjacent to the opening 123 of the motor shroud 120 and a second longitudinal end 172, opposite to the first longitudinal end 171. The first longitudinal end 171 and the second longitudinal end 172 are connected by a through hole 173, also co-axial with respect to the longitudinal axis X.

The through hole 173 is connected to the shroud cooling channel 130. In particular, the through hole 173 at the first longitudinal end 171 directly faces the secondary rotor 160. A portion of the main air flow 200 from the duct 105, enters the through hole 173 of the silencers 170 at the second longitudinal end 172. At the first longitudinal end 171 such flow of air leaves the through hole 173 and enters the first portion 131 of the shroud cooling channel 130, through the secondary rotor 160. From the first portion 131, such flow of air further flows in the second return portion 132 and then leaves the motor shroud 120 orthogonally to the longitudinal axis X through passages 129 provided between the lateral wall 122 of the motor shroud 120 and the silencer 170.

## Claims

1. Cooling fan (100) for a wind turbine (1) comprising:
- a cooling fan motor (110) extending along a longitudinal axis (X) between a drive end (111) and a non-drive end (112),
- a motor shroud (120) having a shroud base (121) transversal to the longitudinal axis (X) at the drive end (111) or at the non-drive end (112), and a lateral wall (122) extending from the shroud base (121) towards the non-drive end (112) or the drive end (111), respectively, up to an opening (123) of the motor shroud (120),
- a shroud cooling channel (130) comprised between the cooling fan motor (110) and the motor shroud (120), wherein the shroud cooling channel (130) comprises at least a first portion (131) longitudinally extending from the opening (123) to the shroud base (121) and at least a second return portion (132) extending from the shroud base (121) to the opening (123).

2. Cooling fan (100) as claimed in claim 1, wherein the first portion (131) and the second return portion (132) of the shroud cooling channel (130) are separated from each by a flow guide (133).

3. Cooling fan (100) as claimed in claim 2, wherein the flow guide (133) is longitudinally extended from the opening (123) of the motor shroud (120) towards the shroud base (121) .

4. Cooling fan (100) as claimed in claim 3, wherein the flow guide (133) is parallel to the lateral wall (122) of the motor shroud (120).

5. Cooling fan (100) as claimed in in any one of the preceding claims, wherein the shroud base (121) is provided at the drive end (111) and the opening (123) of the motor shroud (120) at the non-drive end (112), the cooling fan (100) comprising a principal rotor (150) attached to the drive end (111) of the cooling fan motor (110) for channeling a cooling medium from the drive end (111) towards the non-drive end (112) .

6. Cooling fan (100) as claimed in claim 5, wherein the cooling fan (100) comprises a secondary rotor (160) attached to the non-drive end (112) of the cooling fan motor (110) for channeling the cooling medium in the shroud cooling channel (130) .

7. Cooling fan (100) as claimed in in any one of the preceding claims, wherein the cooling fan (100) comprises a silencer (170) adjacent to the opening (123) of the motor shroud (120).

8. Cooling fan (100) as claimed in claim 7, wherein the silencer (170) is attached to the lateral wall (122) of the motor shroud (120) or to the flow guide (133).

9. Cooling fan (100) as claimed in claim 7 or 8, wherein the silencer (170) comprises a through hole (173) connected to the shroud cooling channel (130).

10. Cooling fan (100) as claimed in claim 9, wherein the silencer (170) longitudinally extends between a first longitudinal end (171) adjacent to the opening (123) of the motor shroud (120) and a second longitudinal end (172), the first longitudinal end (171) and the second longitudinal end (172) being connected by the through hole (173).

11. Wind turbine (1) comprising a cooling fan (100) as claimed in any of the claims 1 to 10.
